# EUROPEAN PATENT APPLICATION

(11) **EP 4 670 537 A1**
(43) Date of publication of application: **31.12.2025**
(21) Application number: 24760472.1
(22) Date of filing: 11.01.2024
(51) Int. Cl.: A24F 40/50, A24F 40/46, A24F 40/51, A24D 1/02, D21H 19/02, A24D 1/20, A24F 40/20

(54) **AEROSOL-GENERATING DEVICE AND OPERATION METHOD THEREFOR**

(30) Priority: 22.02.2023 KR 20230023644; 15.05.2023 KR 20230062518
(71) Applicant: KT&G Corporation, Daedeok-gu Daejeon 34337 (KR)
(72) Inventor: KIM, Yong Hwan, Anyang-si, Gyeonggi-do 13970 (KR); KWON, Young Bum, Yongin-si, Gyeonggi-do 16930 (KR); KIM, Dong Sung, Seoul 06310 (KR); LIM, Hun Il, Seoul 05555 (KR)
(74) Representative: Ter Meer Steinmeister & Partner
(86) International application number: PCT/KR2024/000544
(87) International publication number: WO 2024/177279

(57) **Abstract**

An aerosol generating device includes a receiving space into which an aerosol generating article is inserted, a heater configured to heat the aerosol generating article, an insertion detecting sensor configured to detect whether the aerosol generating article is inserted into the receiving space, a memory including a lookup table in which a preset value is matched to each aerosol generating article, and a controller. The controller is configured to, when it is detected through the insertion detecting sensor that the aerosol generating article inserted into the receiving space is moved from the receiving space during a heating operation of the heater, pause the heating operation of the heater, and determine whether to resume the heating operation of the heater according to whether the aerosol generating article is re-inserted into the receiving space within a preset grace time from a time point when the heating operation is paused.

## Description

### Technical Field

The disclosure relates to an aerosol generating device, and more particularly, to an aerosol generating device capable of controlling a heating operation of a heater according to whether an aerosol generating article is inserted into a receiving space of the aerosol generating device.

### Background Art

Recently, there has been an increasing demand for smoking methods that replace general cigarettes. For example, there is an increasing demand for a method of generating aerosol by heating an aerosol generating material in a cigarette rather than a method of generating aerosol by burning a cigarette. Accordingly, research on a heating-type cigarette or a heating-type aerosol generating device has been actively conducted.

An aerosol generating article inserted into a receiving space of an aerosol generating device may be partially separated or removed from the receiving space for various reasons. For example, when a user smokes in dry weather, an aerosol generating article may stick to the user's lips and come up.

When a heating operation of a heater is maintained when an aerosol generating article is partially separated from a receiving space, a sufficient amount of atomization may not be ensured and a sufficient smoking impression may not be provided to a user. Also, when a heating operation of a heater is maintained even when an aerosol generating article is completely removed from a receiving space, the heater may be overheated, which may increase power consumption and cause malfunction.

### Disclosure

### Technical Problem

An objective of the disclosure is to provide an aerosol generating device capable of providing a sufficient smoking impression and reducing unnecessary power consumption by applying smartoff technology.

Technical objectives to be achieved by embodiments are not limited thereto, and other unmentioned technical objectives will be apparent to one of ordinary skill in the art from the present specification and the accompanying drawings.

### Technical Solution

According to an embodiment, an aerosol generating device includes a receiving space into which an aerosol generating article is inserted, a heater configured to heat the aerosol generating article, an insertion detecting sensor configured to detect whether the aerosol generating article is inserted into the receiving space, a memory including a lookup table in which a preset value is matched to each aerosol generating article, and a controller. The controller is configured to, when it is detected through the insertion detecting sensor that the aerosol generating article inserted into the receiving space is moved from the receiving space during a heating operation of the heater, pause the heating operation of the heater, and determine whether to resume the heating operation of the heater according to whether the aerosol generating article is re-inserted into the receiving space within a preset grace time from a time point when the heating operation is paused.

According to an embodiment, an operating method of an aerosol generating device includes detecting, through an insertion detecting sensor, whether an aerosol generating article inserted into a receiving space is moved from the receiving space, during a heating operation of a heater, pausing the heating operation of the heater when the aerosol generating article is moved from the receiving space, and determining whether to resume the heating operation of the heater according to whether the aerosol generating article is re-inserted into the receiving space within a preset grace time from a time point when the heating operation is paused.

### Advantageous Effects

Because an aerosol generating device according to an embodiment controls a heating operation of a heater when movement of an aerosol generating article from a receiving space of the aerosol generating device is detected by using an insertion detecting sensor, a sufficient smoking impression may be provided to a user and unnecessary power consumption may be reduced.

The effects according to one or embodiments are not limited to the effects described above, and unmentioned effects will be clearly understood by one of ordinary skill in the art from the present specification and the accompanying drawings.

### Description of Drawings

FIG. 1 is a block diagram illustrating an aerosol generating system, according to an embodiment;
FIG. 2 is a flowchart illustrating a method by which the aerosol generating device of FIG. 1 controls power supply to a heater;
FIG. 3 is a graph for describing a temperature change due to the method of controlling power supply to a heater of FIG. 2;
FIGS. 4A and 4B are views for describing a method of controlling an inductive sensor of an aerosol generating device, according to an embodiment;
FIG. 5A is a flowchart illustrating a method by which an aerosol generating device determines whether an aerosol generating article is moved, according to an embodiment;
FIG. 5B is a flowchart illustrating a method by which an aerosol generating device controls power supply to a heater based on whether an aerosol generating article is inserted, according to an embodiment.
FIG. 6A is a view for describing a method of controlling an inductive sensor of an aerosol generating device when an aerosol generating article is in a first state, according to an embodiment;
FIG. 6B is a view for describing a method of controlling an inductive sensor of an aerosol generating device when an aerosol generating article is in a second state, according to an embodiment;
FIG. 6C is a view for describing a method of controlling an inductive sensor of an aerosol generating device when an aerosol generating article is in a third state, according to an embodiment;
FIG. 7 is a view for describing elements constituting an aerosol generating device, according to an embodiment;
FIGS. 8 and 9 are views illustrating examples of a cigarette; and
FIG. 10 is a block diagram illustrating an aerosol generating device, according to another embodiment.

### Mode for Invention

Regarding the terms in the various embodiments, the general terms which are currently and widely used are selected in consideration of functions of structural elements in the various embodiments of the present disclosure. However, meanings of the terms can be changed according to intention, a judicial precedence, the appearance of a new technology, and the like. In addition, in certain cases, terms which can be arbitrarily selected by the applicant in particular cases. In such a case, the meaning of the terms will be described in detail at the corresponding portion in the description of the present disclosure. Therefore, the terms used in the various embodiments of the present disclosure should be defined based on the meanings of the terms and the descriptions provided herein.

In addition, unless explicitly described to the contrary, the word "comprise" and variations such as "comprises" or "comprising" will be understood to imply the inclusion of stated elements but not the exclusion of any other elements. In addition, the terms "-er", "-or", and "module" described in the specification mean units for processing at least one function and operation and can be implemented by hardware components or software components and combinations thereof.

The disclosure will now be described more fully with reference to the accompanying drawings for one of ordinary skill in the art to be able to perform the disclosure without any difficulty. However, the disclosure may be embodied in many different forms and is not limited to the embodiments set forth herein.

Hereinafter, embodiments will be described in detail with reference to the accompanying drawings.

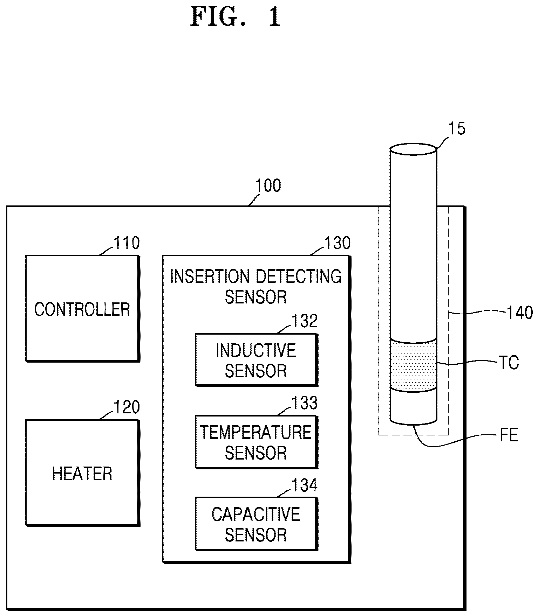

FIG. 1 is a block diagram illustrating an aerosol generating system, according to an embodiment.

Referring to FIG. 1, an aerosol generating system may include an aerosol generating device 100 and an aerosol generating article 15.

The aerosol generating device 100 may include a controller 110, a heater 120, an insertion detecting sensor 130, and a receiving space 140. According to an embodiment, the aerosol generating article 15 may be accommodated in the receiving space 140. The aerosol generating device 100 may generate aerosol by heating the aerosol generating article 15 inserted into the receiving space 140 through the heater 120.

The aerosol generating article 15 may correspond to, but is not limited to, a cigarette. The aerosol generating article 15 may be any article including an aerosol generating material without limitation. The aerosol generating article 15 may include an aerosol generating material and a thermally conductive material TC. The aerosol generating article 15 may be heated and vaporized by the heater 120 of the aerosol generating device 100 to generate aerosol.

For example, the aerosol generating material may include at least one of, but not limited to, glycerin, propylene glycol, ethylene glycol, dipropylene glycol, diethylene glycol, triethylene glycol, tetraethylene glycol, and oleyl alcohol. Also, the aerosol generating material may include other additives such as flavors, a wetting agent, and/or organic acid. Also, a flavoring liquid such as menthol or a moisturizer may be added to the aerosol generating material.

The thermally conductive material TC is a magnetic and conductive material and has characteristics of intrinsic permeability and dielectric constant. Accordingly, an inductance value of a coil and a capacitance value of a capacitor may vary according to the presence of the thermally conductive material TC and the movement of the thermally conductive material TC. For example, the thermally conductive material TC may be a metal material including at least one of aluminum, nickel, and iron. The thermally conductive material TC may be a metal foil such as an aluminum foil, but the disclosure is not limited thereto. For example, the thermally conductive material TC may be manufactured in the form of ink, tape, band, or paper.

The aerosol generating article 15 may be a cigarette-type article extending in one direction, according to an embodiment. In this case, the aerosol generating article 15 may include a tobacco rod including an aerosol generating material, a cooling rod for cooling aerosol, and a filter rod for filtering impurities. When the aerosol generating article 15 is a cigarette-type article, the tobacco rod may be surrounded by the thermally conductive material TC. The thermally conductive material TC surrounding the tobacco rod may evenly distribute heat transferred to the tobacco rod, thereby improving thermal conductivity applied to the tobacco rod.

According to another embodiment, the aerosol generating article 15 may be a cartridge-type article including a liquid aerosol generating material. The aerosol generating article 15 may include a storage in which a liquid aerosol generating material is accommodated, a wick for delivering the aerosol generating material from the storage, a heater surrounding the wick and configured to heat the aerosol generating material absorbed into the wick, and a contact terminal for connecting the heater to a battery.

**In** an embodiment, the heater 120 may heat the aerosol generating article 15 inserted into a receiving space of the aerosol generating device 100.

For example, the heater 120 may be an induction heater. In detail, the heater 120 may include an induction coil for heating the aerosol generating article 15 by using an induction heating method and a susceptor that may be heated when a variable magnetic field generated by the induction coil passes through the susceptor.

**In** another example, the heater 120 may be an electrically resistive heater. In detail, the heater 120 may include an electrically conductive track, and may be heated when current flows through the electrically conductive track. However, the heater 120 is not limited to the above examples, and may be any heater as long as it may be heated to a desired temperature without limitation. In this case, the desired temperature may be pre-set in the aerosol generating device 100, or may be set to a temperature desired by a user.

**In** an embodiment, the insertion detecting sensor 130 may include at least one of an inductive sensor 132, a temperature sensor 133, and a capacitive sensor 134.

The inductive sensor 132 may detect whether the aerosol generating article 15 is removed from, partially is moved from, or inserted into the receiving space of the aerosol generating device 100.

The inductive sensor 132 may measure a coil and an inductance value of the coil. According to Faraday's law of electromagnetic induction, when a magnetic field changes around a coil through which current flows, characteristics of the current flowing through the coil may change.

As the aerosol generating article 15 is inserted into or removed from the receiving space 140, current flowing through the coil may induce eddy current in the thermally conductive material TC of the aerosol generating article 15. The eddy current flowing through the thermally conductive material TC may change characteristics of current such as a frequency of current flowing through the coil and an inductance value of the coil through mutual induction with the coil again.

The inductive sensor 132 may measure the changed characteristics of the current. For example, characteristics of current flowing through the coil may include a frequency value of alternating current, a current value, a voltage value, an inductance value, an effective resistance, and an impedance value. The inductive sensor 132 may further include a frequency measuring element, a rectifier, an amplifier, or an oscillation circuit that generates electrical vibration.

When the inductive sensor 132 measures an inductance value of the coil, it means that the inductive sensor 132 measures any one of characteristics of current flowing through the coil and obtains an inductance value through calculation from the measured characteristic value of the current. The temperature sensor 133 may detect whether the aerosol generating article 15 is removed from, partially moved from, or inserted into the receiving space of the aerosol generating device 100. The temperature sensor 133 may detect a temperature change occurring when the aerosol generating article 15 is removed from, partially moved from, or inserted into the receiving space.

The capacitive sensor 134 may detect whether the aerosol generating article 15 is removed from, partially moved from, or inserted into the receiving space of the aerosol generating device 100.

The capacitive sensor 134 may measure a capacitance value between two electrodes.

The capacitive sensor 134 may include two electrodes facing each other. A dielectric may be located between the two electrodes. Movement of the thermally conductive material TC according to insertion and removal of an aerosol generating material 14 into/from the receiving space 140 may affect an electric field between the two electrodes, and a capacitance between the two electrodes may change. The capacitive sensor 134 may measure the capacitance value.

In an embodiment, the controller 110 may determine whether the aerosol generating article 15 is inserted into the receiving space 140 based on a sensing value detected by the insertion detecting sensor 130. In this case, the sensing value may include at least one of an inductance value measured by the inductive sensor 132, a temperature value measured by the temperature sensor 133, and a capacitance value measured by the capacitive sensor 134.

In an embodiment, the controller 110 may be hardware that controls an overall operation of the aerosol generating device 100. For example, the controller 110 may control not only operations of the heater 120 and the insertion detecting sensor 130 but also operations of other elements included in the aerosol generating device 100. In an embodiment, the controller 110 may check a state of each of elements of the aerosol generating device 100 and may determine whether the aerosol generating device 100 is operable.

An internal structure of the aerosol generating device 100 is not limited to that shown in FIG. 1. It will be understood by one of ordinary skill in the art related to the present embodiment that some of elements of the hardware shown in FIG. 1 may be omitted or new elements may be further added according to a design of the aerosol generating device 100.

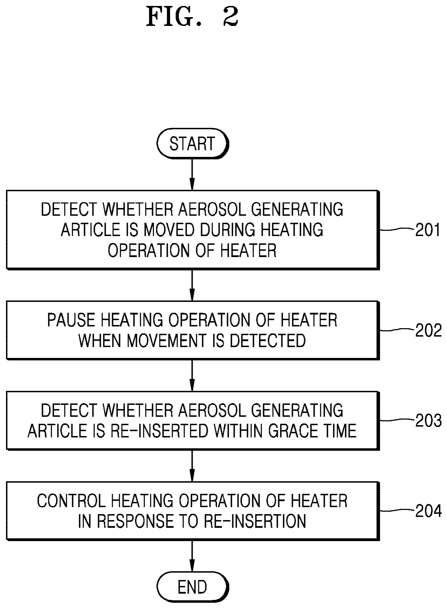

FIG. 2 is a flowchart illustrating a method by which the aerosol generating device of FIG. 1 controls power supply to a heater.

Referring to FIGS. 1 and 2, in operation 201, the controller 110 may detect, through the insertion detecting sensor 130, whether the aerosol generating article 15 inserted into the receiving space 140 is moved from the receiving space 140 during a heating operation of the heater 120. In this case, the movement of the aerosol generating article 15 may include a case where a front end FE of the aerosol generating article 15 deviates by a certain distance from a bottom surface of the receiving space 140 or a case where the front end FE of the aerosol generating article 15 facing the bottom surface of the receiving space 140 completely deviates from the receiving space 140.

When a change amount of a sensing value detected by using the insertion detecting sensor 130 is different from a preset value, the controller 110 may determine that the aerosol generating article 15 is moved. For example, when a change amount of a sensing value detected by using the insertion detecting sensor 130 is equal to or greater than a preset value (or a first threshold value), the controller 110 may determine that the aerosol generating article 15 is moved.

In an embodiment, the controller 110 may detect an inductance change amount through the inductive sensor 132, and may detect whether the aerosol generating article 15 is moved from the receiving space 140 of the aerosol generating device 100. For example, the aerosol generating article 15 inserted into the receiving space 140 of the aerosol generating device 100 may include the thermally conductive material TC. A magnetic field may be generated on one surface of the inductive sensor 132. When the thermally conductive material TC located in the magnetic field generated by the inductive sensor 132 is moved, the controller 110 may detect through the inductive sensor 132 that an inductance value is changed due to movement of the thermally conductive material TC. When an inductance change amount is greater than a preset value, the controller 110 may detect that the aerosol generating article 15 is moved from the receiving space 140 of the aerosol generating device 100.

In another embodiment, the controller 110 may detect a temperature change through the temperature sensor 133, and may detect whether the aerosol generating article 15 is moved from the receiving space 140 of the aerosol generating device 100. For example, when the aerosol generating article 15 inserted into the receiving space of the aerosol generating device 100 is moved (or removed), the temperature sensor 133 may detect that an internal temperature of the aerosol generating device 100 rapidly increases. When a temperature change amount is greater than a preset value, the controller 110 may detect that the aerosol generating article 15 is moved from the receiving space 140 of the aerosol generating device 100.

In another example, the controller 110 may detect a capacitance change amount through the capacitive sensor 134, and may detect whether the aerosol generating article 15 is moved from the receiving space 140 of the aerosol generating device 100. For example, the aerosol generating article 15 inserted into the receiving space 140 of the aerosol generating device 100 may include the thermally conductive material TC. Movement of the thermally conductive material TC according to insertion and removal of the aerosol generating article 14 into and from the receiving space 140 may affect an electric field between two electrodes, and a capacitance value between the two electrodes may change. When the thermally conductive material TC is moved between the two electrodes, the controller 110 may detect through the capacitive sensor 134 that a capacitance value is changed due to the movement of the thermally conductive material TC. When a capacitance change amount is greater than a preset value, the controller 110 may detect that the aerosol generating article 15 is moved from the receiving space 140 of the aerosol generating device 100.

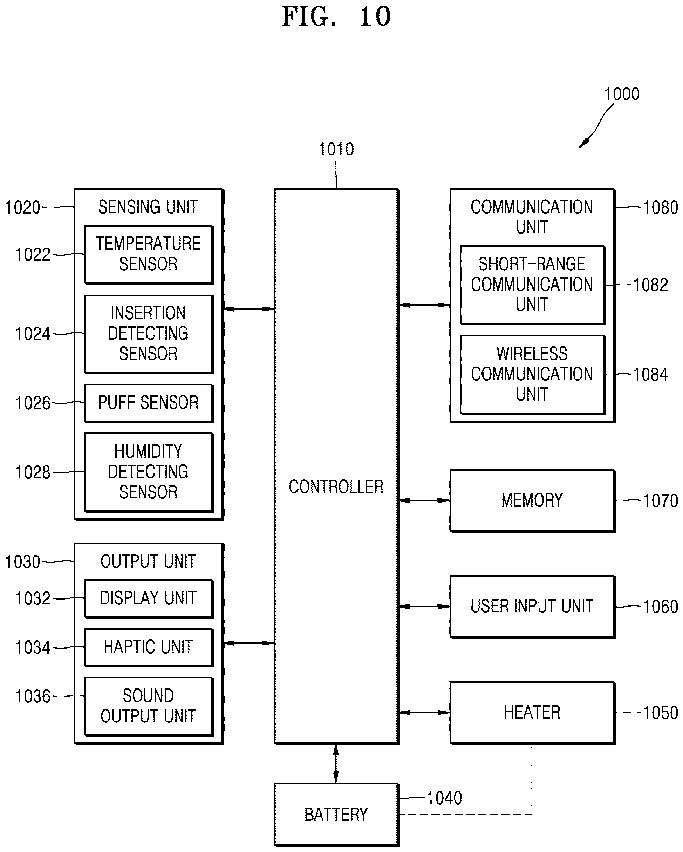

Although not shown in FIG. 1, the aerosol generating device 100 may further include a memory 1070 (see FIG. 10) including a lookup table in which the preset value is matched to each aerosol generating article 15. The preset value refers to a threshold value (i.e., a change amount of a sensing value) at which the atomization amount of aerosol provided to a user may be considered appropriate, and may be calculated experimentally and/or statistically for each aerosol generating article 15. This is because even when movement of the aerosol generating article 15 in the receiving space 140 is the same, the amount of atomization is different when a type and/or content of an aerosol generating material included in the aerosol generating article 15 is different.

The preset value (i.e., a change amount of a sensing value) may be converted into a distance moved from a bottom surface of the receiving space 140. When the aerosol generating article 15 is moved within a preset distance from the bottom surface of the receiving space 140, the amount of atomization provided by the aerosol generating article 15 may provide a sufficient smoking impression to the user. For example, when the aerosol generating article 15 is moved within 4 mm from the bottom surface of the receiving space 140, substantially the same amount of atomization may be provided to the user as the aerosol generating article 15 is normally inserted into the receiving space 140.

In operation 202, when the controller 110 detects through the insertion detecting sensor 130 that the aerosol generating article 15 inserted into the receiving space 140 is moved from the receiving space 140 during the heating operation of the heater 120, the controller 110 may pause the heating operation of the heater 120.

When movement of the aerosol generating article 15 occurs in the receiving space 140 regardless of the user's intention, the controller 110 may immediately turn off the heating operation of the heater 120. Accordingly, the aerosol generating device 100 may prevent unnecessary power consumption.

Also, when the heating operation of the heater 120 is stopped when the aerosol generating article 15 is moved by the preset distance or more in the receiving space 140, a low-quality smoking impression may be prevented from being provided to the user due to poor atomization, and when the heating operation of the heater 120 is stopped when the aerosol generating article 15 is completely removed from the receiving space 140, overheating of the heater may be prevented, thereby preventing an increase in power consumption and a cause of failure.

When the controller 110 according to an embodiment detects through the insertion detecting sensor 130 that the aerosol generating article 15 inserted into the receiving space 140 is moved from the receiving space 140 during the heating operation of the heater 120, the controller 110 may provide an alarm and/or warning to the user through an output unit 1030 (see FIG. 10).

For example, when it is detected through the insertion detecting sensor 130 that the aerosol generating article 15 inserted into the receiving space 140 is moved from the receiving space 140 during the heating operation of the heater 120, the controller 110 may display through a display unit 1032 (see FIG. 10) a phrase or a pattern indicating that the aerosol generating article 15 is abnormally inserted or may display a flashing red screen. Also, the controller 110 may provide a preset vibration pattern through a haptic unit 1034 (see FIG. 10), or may output through a sound output unit 1036 (see FIG. 10) a sound such as a voice or a beep sound indicating that the aerosol generating article 15 is abnormally inserted.

In operation 203, the controller 110 may determine whether the aerosol generating article 15 is re-inserted into the receiving space 140 within a preset grace time from a time point when the heating operation of the heater 120 is paused.

When a change amount of a sensing value detected by using the insertion detecting sensor 130 within the preset grace time is equal to or greater than a preset value (or a second threshold value), the controller 110 may determine that the aerosol generating article 15 is re-inserted. For example, when the preset grace time is 5 seconds, the controller 110 may determine that the aerosol generating article 15 is reinserted when a change amount of a sensing value detected for 5 seconds is greater than the preset value.

In contrast, when a change amount of a sensing value detected by using the insertion detecting sensor 130 within the preset grace time is less than the preset value (or the second threshold value), the controller 110 may determine that the aerosol generating article 15 is not re-inserted. For example, when the designated time is 5 seconds, when a change amount of a sensing value detected for 5 seconds is less than the preset value, the controller 110 may determine that the aerosol generating article 15 is not re-inserted.

In operation 204, the controller 110 may determine whether to resume the heating operation of the heater 120 according to whether the aerosol generating article 15 is re-inserted into the receiving space 140.

When it is determined that the aerosol generating article 15 is re-inserted into the receiving space 140 within the preset grace time, the controller 110 may automatically resume the heating operation of the heater 120. When the aerosol generating article 15 is accidently moved from the aerosol generating device 100 contrary to the user's intention, the heater 120 may be immediately paused, but when the aerosol generating article 15 is re-inserted within the grace time, the heating operation of the heater 120 may be automatically resumed, thereby providing convenience in use and uninterrupted smoking. Also, because the controller 110 controls power of the heater 120 by pausing and resuming the heater 120 rather than by completely turning off and turning on the heater 120, power waste may be minimized.

In contrast, when it is determined that the aerosol generating article 15 is not re-inserted into the receiving space 140 within the preset grace time, the controller 110 may completely turn off the heating operation of the heater 120. In this case, when power supply to the heater 120 is turned off, it may mean that smoking by the user ends.

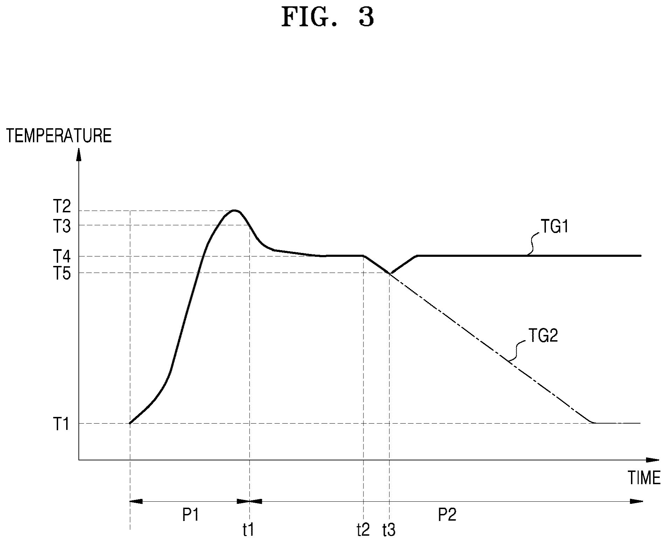

FIG. 3 is a graph for describing a temperature change due to the method of controlling power supply to a heater of FIG. 2. In this case, a graph marked by a solid line is a first temperature graph when an aerosol generating article is re-inserted within a grace time, and a graph marked by a dash-dotted line is a second temperature graph when an aerosol generating article is not reinserted within a grace time.

Referring to FIG. 2, a first temperature graph TG1 represents temperature values over time, and may be divided into a first interval P1 that is a pre-heating interval and a second interval P2 that is a smoking interval based on a first time point t1.

The first interval P1 may include an interval where a temperature increases from a first temperature T1 that is an external air temperature to a second temperature T2 at which an aerosol generating material is volatilized, and an interval where the temperature decreases to a third temperature T3 that is a smoking start temperature. The second interval P2 may include an interval where the temperature decreases from the third temperature T3 to a fourth temperature T4 that is a maintenance temperature, and an interval where the fourth temperature T4 is maintained. In this case, the second temperature T2, the third temperature T3, and the fourth temperature T4 may be above a temperature at which the aerosol generating material is volatilized, and may vary according to a type of the aerosol generating material.

Referring to FIGS. 1 to 3, in the second interval P2, an event in which the aerosol generating article 15 is moved from the receiving space 140 may occur.

When a change amount of a sensing value detected by using the insertion detecting sensor 130 is equal to or greater than a preset value (or a first threshold value), the controller 110 may determine that the aerosol generating article 15 is moved. At a second time point t2 when it is determined through the insertion detecting sensor 130 that the aerosol generating article 15 inserted into the receiving space 140 is moved from the receiving space 140 during a heating operation of the heater 120, the controller 110 may immediately pause the heating operation of the heater 120.

Accordingly, the first temperature graph TG1 and a second temperature graph TG2 may include an interval where the temperature decreases from the fourth temperature T4 to a fifth temperature T5 that is a standby temperature. In this case, the fifth temperature T5 may decrease in proportion to a time taken until the aerosol generating article 15 is re-inserted. However, the fifth temperature T5 may have a lower limit at a preset grace time (e.g., 5 seconds). The fifth temperature T5 may be set to a temperature that may return to the fourth temperature T4 before a user recognizes a temperature decrease (or a decrease in a smoking impression) by resuming the heating operation of the heater 120.

When the controller 110 determines that the aerosol generating article 15 is re-inserted into the receiving space 140 within the preset grace time at a third time point t3, the controller 110 may automatically resume the heating operation of the heater 120. Accordingly, the first temperature graph TG1 may include an interval where the temperature increases from the fifth temperature T5 that is a standby temperature to the fourth temperature T4 that is a maintenance temperature.

In contrast, when the controller 110 determines that the aerosol generating article 15 is not inserted into the receiving space 140 within the preset grace time at the third time point t3, the controller 110 may completely turn off the heating operation of the heater 120. Accordingly, the second temperature graph TG2 may include an interval where the temperature decreases from the firth temperature T5 that is a standby temperature to the first temperature T1 that is an external air temperature.

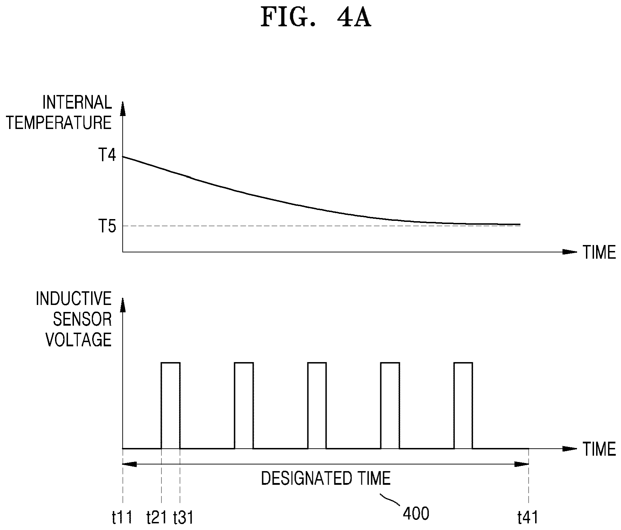

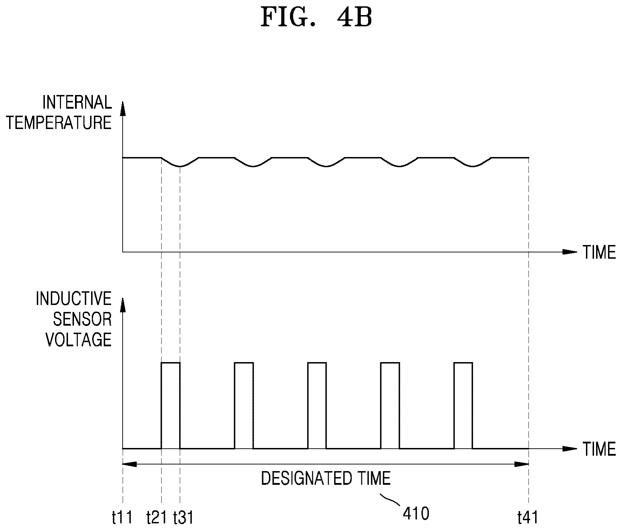

FIGS. 4A and 4B are views for describing a method of controlling an inductive sensor of an aerosol generating device, according to an embodiment.

Referring to FIGS. 1 and 4A, the controller 110 may detect an inductance change through the inductive sensor 132 during a grace time 400. For example, the controller 110 may detect an inductance change by controlling a voltage of the inductive sensor 132 by using a pulse width modulation (PWM) method. In this case, the controller 110 may pre-set the number of times the inductive sensor 132 is switched to an active state during the grace time 400. Although the inductive sensor 132 is switched to an active state five times during the grace time 400 in FIG. 4, the disclosure is not limited thereto.

In an embodiment, the controller 110 may determine that the aerosol generating article 15 is moved from the receiving space 140 of the aerosol generating device 100 at an 11th time point t11. The 11th time point t11 may refer to a time point at which counting of the grace time 400 starts.

In an embodiment, the controller 110 may switch a state of the inductive sensor 132 according to a certain period to an active state by controlling a voltage supplied to the inductive sensor 132 at a 21st time point t21. In this case, when the aerosol generating article 15 is not re-inserted during the grace time 400, a heating operation of the heater 120 is paused, and thus, an internal temperature of the aerosol generating device 100 may decrease from the fourth temperature T4 to the fifth temperature T5. Accordingly, in order to prevent an inductance value detected by the inductive sensor 132 from being distorted at a high temperature, heating of the heater 120 does not need to be periodically stopped.

In an embodiment, the controller 110 may switch a state of the inductive sensor 132 to an inactive state at a 31st time point t31.

In an embodiment, the controller 110 may detect an inductance change through the inductive sensor 132 at least once (e.g., five times) from the 11th time point t11 to a 41st time point t41. The controller 110 may determine whether the aerosol generating article 15 is re-inserted based on an inductance change amount detected during the grace time 400 from the 11th time point t11 to the 41st time point t41. For example, when an inductance change amount detected during the grace time 400 from the 11th time point t11 to the 41st time point t41 is less than a threshold value, the controller 110 may determine that the aerosol generating article 15 is not re-inserted, and when an inductance change amount detected during the grace time 400 from the 11th time point t11 to the 41st time point t41 is equal to or greater than the threshold value, the controller 110 may determine that the aerosol generating article 15 is re-inserted.

However, unlike in FIG. 4A showing only time points (or during the grace time) after the aerosol generating article 15 is moved from the receiving space of the aerosol generating device 100, in the case of a designated time 410 for determining whether the aerosol generating article 15 is moved from the receiving space 140 of the aerosol generating device 100, as shown in FIG. 4B, the controller 110 may switch a state of the inductive sensor 132 to an active state by controlling a voltage supplied to the inductive sensor 132 at the 21st time point t21. In this case, the controller 110 may cut off power supplied from a battery to the heater 120 at the 21st time point t21. That is, the controller 110 may perform an operation of cutting off power supplied to the heater 120 and an operation of switching a state of the inductive sensor 132 to an active state in parallel. In an embodiment, as power supplied to the heater 120 is cut off at the 21st time point t21, an internal temperature of the aerosol generating device 100 may substantially decrease. Because an inductance value detected by the inductive sensor 132 may be distorted at a high temperature, the controller 110 may periodically stop heating the heater 120 and may detect an inductance change through the inductive sensor 132.

In an embodiment, the controller 110 may switch a state of the inductive sensor 132 to an inactive state at the 31st time point t31. In this case, the controller 110 may control power to be supplied from the battery to the heater 120 at the 31st time point t31. That is, the controller 110 may perform an operation of supplying power to the heater 120 and an operation of switching a state of the inductive sensor 132 to an inactive state in parallel. In an embodiment, as power is supplied to the heater 120 at the 31st time point t31, an internal temperature of the aerosol generating device 100 may substantially increase.

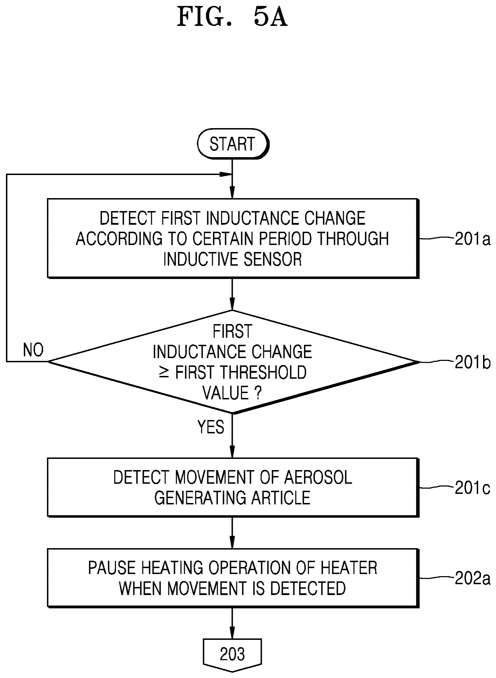

FIG. 5A is a flowchart illustrating a method by which an aerosol generating device determines whether an aerosol generating article is moved, according to an embodiment. FIG. 5A is a flowchart for describing operations 201 and 202 of FIG. 2 in detail, and thus, when FIG. 5A is described, a description that is the same as, similar to, or corresponds to that made above may be omitted.

Referring to FIGS. 1, 2, and 5A, in operation 201a, the controller 110 may detect a first inductance change according to a certain period through the inductive sensor 132. For example, the first inductance change may refer to a minimum inductance change value at which it is determined that the aerosol generating article 15 is moved.

In an embodiment, the controller 110 may switch a state of the inductive sensor 132 to an active state according to a certain period and may cut off power supplied to the heater 120. In this case, the certain period may refer to an optimal period for detecting an inductance change through the inductive sensor 132. For example, when the certain period is set to 1 second, the controller 110 may switch a state of the inductive sensor 132 to an active state at intervals of 1 second and may cut off power supplied to the heater 120.

In an embodiment, after the controller 110 switches a state of the inductive sensor 132 to an active state for the certain period, the controller 110 may obtain data on an inductance change and may switch a state of the inductive sensor 132 to an inactive state. For example, when the certain period is set to 1 second, after the controller 110 switches a state of the inductive sensor 132 to an active state, the controller 110 may obtain data on an inductance change for 30 [ms], may switch a state of the inductive sensor 132 to an inactive state, and may maintain for 970 [ms].

According to an embodiment, in operation 201b, the controller 110 may determine whether a magnitude of the first inductance change detected by the inductive sensor 132 is equal to or greater than a first threshold value. For example, the first threshold value may refer to a minimum value of an inductance change amount occurring as the aerosol generating article15 including the thermally conductive material TC is moved from the receiving space of the aerosol generating device 100.

In an embodiment, when it is determined that a magnitude of the detected first inductance change is equal to or greater than the first threshold value, in operation 201c, the controller 110 may detect that the aerosol generating article 15 is moved. In another embodiment, when it is determined that a magnitude of the detected first inductance change is less than the first threshold value, the controller 110 may return to operation 201a and may re-perform the subsequent operations.

According to an embodiment, in operation 202a, when the controller 110 detects through the insertion detecting sensor 130 that the aerosol generating article 15 inserted into the receiving space 140 is moved from the receiving space 140 during a heating operation of the heater 120, the controller 110 may pause the heating operation of the heater 120.

When the aerosol generating article 15 is moved in the receiving space 140 regardless of a user's intention, the controller 110 may immediately turn off the heating operation of the heater 120. Accordingly, the aerosol generating device 100 may prevent unnecessary power consumption.

According to an embodiment, in operation 202a, when the controller 110 detects through the insertion detecting sensor 130 that the aerosol generating article 15 inserted into the receiving space 140 is moved from the receiving space 140 during a heating operation of the heater 120, the controller 110 may provide an alarm and/or warning through the output unit 1030 (see FIG. 10) to the user.

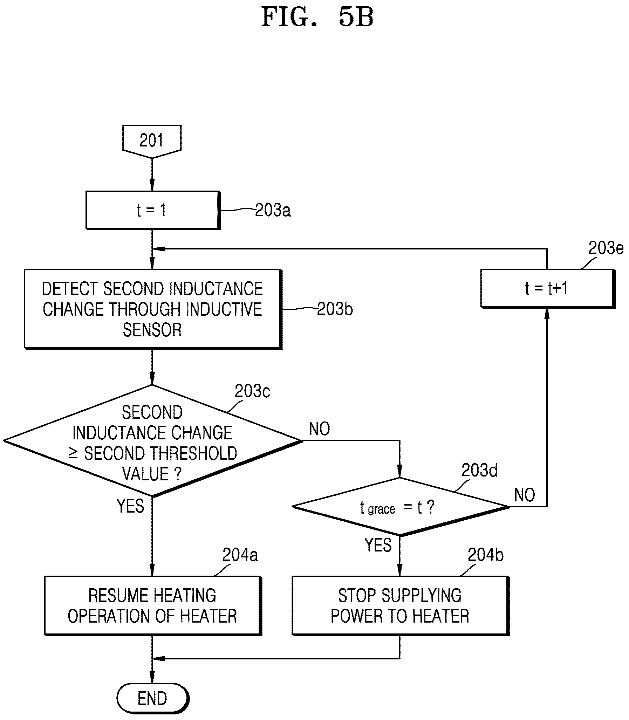

FIG. 5B is a flowchart illustrating a method by which an aerosol generating device controls power supply to a heater based on whether an aerosol generating article is inserted, according to an embodiment. FIG. 5B is a flowchart for describing operations 203 and 204 of FIG. 2 in detail, and thus, when FIG. 5B is described, a description that is the same as, similar to, or corresponds to that made above may be omitted.

Referring to FIG. 5B, in operation 203a, the controller 110 may set an inductance change detection time t to 1. For example, the controller 110 may set the inductance change detection time t to 1 and may perform counting of a designated time (e.g., the grace time 400 of FIG. 3).

According to an embodiment, in operation 203b, the controller 110 may detect a second inductance change through the inductive sensor 132. For example, the second inductance change may refer to a minimum inductance change value at which it is determined that the aerosol generating article 15 is re-inserted.

In an embodiment, the controller 110 may switch a state of the inductive sensor 132 to an active state according to a certain period. In this case, the certain period may refer to an optimal period for detecting an inductance change through the inductive sensor 132. For example, when the certain period is set to 1 second, the controller 110 may switch a state of the inductive sensor 132 to an active state at intervals of 1 second.

In an embodiment, after the controller 110 changes a state of the inductive sensor 132 to an active state for the certain period, the controller 110 may obtain data on an inductance change and may switch a state of the inductive sensor 132 to an inactive state. For example, when the certain period is set to 1 second, after the controller 110 switches a state of the inductive sensor 132 to an active state, the controller 110 may obtain an inductance change for 30 [ms], may switch a state of the inductive sensor 132 to an inactive state, and may maintain for 970 [ms].

According to an embodiment, in operation 203c, the controller 110 may determine whether a magnitude of the second inductance change detected by the inductive sensor 132 is equal to or greater than a second threshold value. For example, the second threshold value may refer to a minimum value of an inductance change amount occurring as the aerosol generating article 15 including the thermally conductive material TC is re-inserted into the receiving space 140 of the aerosol generating device 100.

In an embodiment, when it is determined that a magnitude of the detected second inductance change is equal to or greater than the second threshold value, in operation 204a, the controller 110 may resume the heating operation of the heater 120. For example, when it is determined that a magnitude of the detected second inductance change is equal to or greater than the second threshold value, the controller 110 may resume supplying power from the battery to the heater 120.

In another embodiment, when a magnitude of the detected second inductance change is less than the second threshold value, in operation 203d, the controller 110 may determine whether the inductance change detection time t is the same as a trace time tgrace.

In an embodiment, when it is determined that the inductance change detection time t is not the same as the grace time, in operation 203e, the controller 110 may calculate the inductance change detection time t as t+1. For example, when the inductance change detection time is 1 second (t=1) and the grace time is 5 seconds (tgrace=5), the controller 110 may calculate the inductance change detection time as 2 seconds (t=2). Next, the controller 110 may return to operation 203b and may resume the subsequent operations.

In an embodiment, when it is determined that the inductance change detection time t is the same as a designated time, in operation 204b, the controller 110 may stop supplying power to the heater 120. For example, when the inductance change detection time is 5 seconds (t=5) and the grace time is 5 seconds (tgrace=5), the controller 110 may cut off power supplied from the battery to the heater 120.

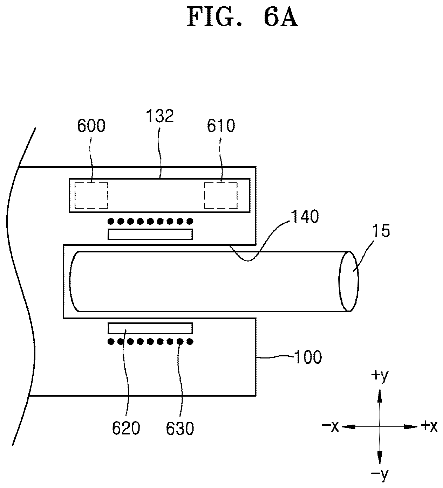

FIG. 6A is a view for describing a method of controlling an inductive sensor of an aerosol generating device when an aerosol generating article is in a first state, according to an embodiment. The first state may refer to a state in which the aerosol generating article 15 is completely inserted into the receiving space 140 of the aerosol generating device 100.

Referring to FIGS. 1 and 6A, the aerosol generating system may include the aerosol generating device 100 and the aerosol generating article 15.

In an embodiment, the aerosol generating device 100 may include the receiving space 140 into which the aerosol generating article 15 may be inserted.

In an embodiment, the aerosol generating device 100 may include the inductive sensor 132, a susceptor 620, and an induction coil 630. In an embodiment, the induction coil 630 may generate a variable magnetic field as power is supplied from the battery, and the susceptor 620 may be heated by the variable magnetic field generated from the induction coil 630. For example, the induction coil 630 may surround an outer circumferential surface of the susceptor 620.

In an embodiment, the induction sensor 132 may include a first channel 600 and a second channel 620. For example, the first channel 600 may detect an inductance change caused by a first portion of an aerosol generating article, and the second channel 610 may detect an inductance change caused by a second portion that is distinguished from the first portion. In an embodiment, the first channel 600 and the second channel 610 may not overlap the susceptor 620. For example, the first channel 600 may be located in an area provided below the susceptor 620 (e.g., an area provided in a -x direction), and the second channel 610 may be located in an area provided above the susceptor 620 (e.g., an area provided in a +x direction). As the first channel 600 and the second channel 610 do not overlap the susceptor 620, the first channel 600 and the second channel 610 may detect an inductance change without being affected by the variable magnetic field generated by the induction coil 630.

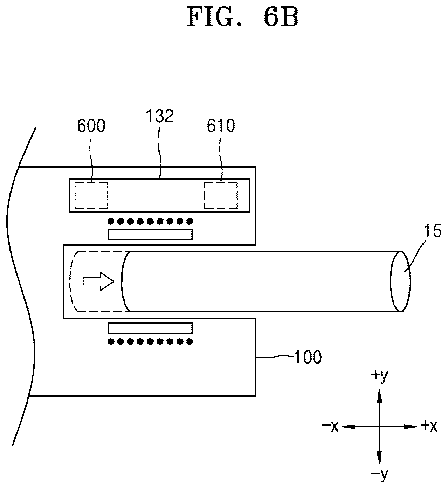

FIG. 6B is a view for describing a method of controlling an inductive sensor of an aerosol generating device when an aerosol generating article is in a second state, according to an embodiment. The second state may refer to a state in which one portion of the aerosol generating article 15 is moved by a certain distance from the receiving space of the aerosol generating device 100.

Referring to FIGS. 1 and 6B, when the aerosol generating article 15 is moved in the +x direction from the receiving space of the aerosol generating device 100, the controller 110 may detect an inductance change through some of a plurality of channels of the inductive sensor 132. For example, the controller 110 may detect an inductance change through the first channel 600 of the inductive sensor 132. In an embodiment, when an inductance change is detected only through some of the plurality of channels of the inductive sensor 132, the controller 110 may not start counting of the designated time considering that an inductance change amount is less than the first threshold value (see FIG. 5).

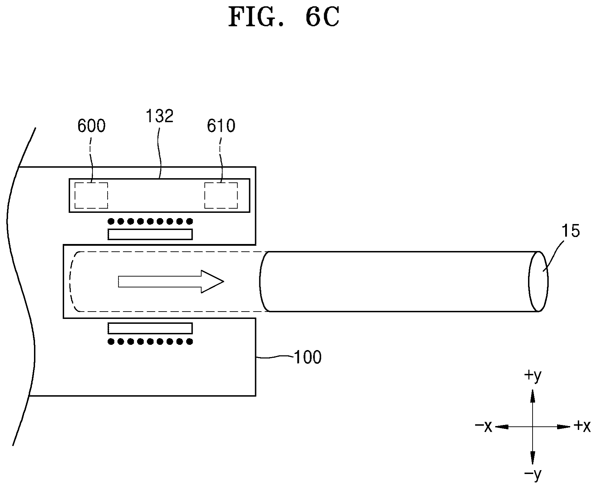

FIG. 6C is a view for describing a method of controlling an inductive sensor of an aerosol generating device when an aerosol generating article is in a third state, according to an embodiment. The third state may refer to a state in which the aerosol generating article 15 is completely removed from the receiving space of the aerosol generating device 100.

Referring to FIG. 6C, when the aerosol generating article 15 is completely removed from the receiving space of the aerosol generating device 100 in the +x direction, the controller 110 may detect an inductance change through the plurality of channels of the inductive sensor 132. For example, the controller 110 may detect an inductance change through the first channel 600 and the second channel 610 of the inductive sensor 132. In an embodiment, when it is detected that an inductance change is detected by both channels, the controller 110 may start counting of the designated time considering that an inductance change amount is equal to or greater than the first threshold value (see FIG. 5).

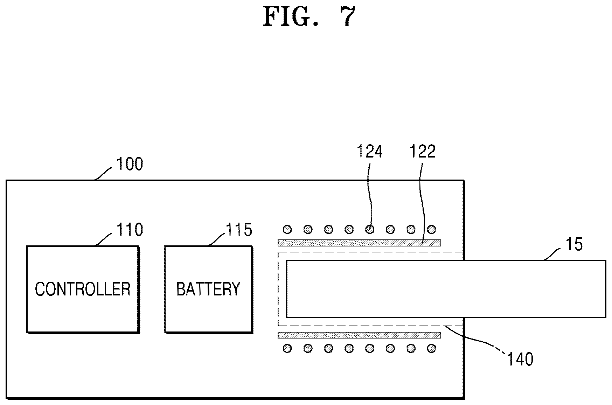

FIG. 7 is a view for describing elements constituting an aerosol generating device, according to an embodiment.

Referring to FIG. 7, the aerosol generating device 100 may include a susceptor 122, an induction coil 124, a battery 115, and the controller 110. However, the disclosure is not limited thereto, and other general-purpose elements in addition to those illustrated in FIG. 7 may be further included in the aerosol generating device 100.

The aerosol generating device 100 may generate aerosol by heating the aerosol generating article 15 accommodated in the aerosol generating device 100 by using an induction heating method. The induction heating method may refer to a method of generating heat from the susceptor 122 by applying an alternating magnetic field whose direction is periodically changed to the susceptor 122 that generates heat by an external magnetic field.

When an alternating magnetic field is applied to the susceptor 122, energy loss due to eddy current loss and hysteresis loss may occur in the susceptor 122 and the lost energy may be released as thermal energy from the susceptor 122. As an amplitude and a frequency of an alternating magnetic field applied to the susceptor 122 increases, more thermal energy may be released from the susceptor 122. The aerosol generating device 100 may release thermal energy from the susceptor 122 by applying an alternating magnetic field to the susceptor 122, and may transfer the thermal energy released from the susceptor 122 to the aerosol generating article 15. In an embodiment, the susceptor 122 may be provided as pieces, flakes, or strips in the aerosol generating device 100.

At least a part of the susceptor 122 may be formed of a ferromagnetic substance. For example, the susceptor 122 may include a metal or carbon. The susceptor 122 may include at least one of ferrite, a ferromagnetic alloy, stainless steel, and aluminum (Al). Also, the susceptor 122 may include at least one of a ceramic such as graphite, molybdenum, silicon carbide, niobium, nickel alloy, metal film, or zirconia, a transition metal such as nickel (Ni) or cobalt (Co), and a metalloid such as boron (B) or phosphorus (P).

The aerosol generating device 100 may accommodate the aerosol generating article 15 therein. The receiving space 140 for accommodating the aerosol generating article 15 may be formed in the aerosol generating device 100.

The susceptor 122 may surround at least a part of an outer surface of the aerosol generating article 15 accommodated in the aerosol generating device 100. For example, the susceptor 122 may surround a tobacco medium included in the aerosol generating article 15. Accordingly, heat may be more efficiently transferred from the susceptor 122 to the tobacco medium.

The induction coil 124 may be provided in the aerosol generating device 100. The induction coil 124 may apply an alternating magnetic field to the susceptor 122. When power is supplied from the aerosol generating device 100 to the induction coil 124, a magnetic field may be formed inside the induction coil 124. When alternating current is applied to the induction coil 124, a direction of the magnetic field formed inside the induction coil 124 may be continuously changed. When the susceptor 122 is located inside the induction coil 124 and is exposed to an alternating magnetic field whose direction is periodically changed, the susceptor 122 may generate heat and the aerosol generating article 15 accommodated in the receiving space of the aerosol generating device 100 may be heated.

The induction coil 124 may be wound along an outer surface of the susceptor 122. Also, the induction coil 124 may be wound along an inner surface of an outer housing of the aerosol generating device 100. The susceptor 122 may be located in an inner space formed when the induction coil 124 is wound. When power is supplied to the induction coil 124, an alternating magnetic field generated by the induction coil 124 may be applied to the susceptor 122.

The induction coil 124 may extend in a longitudinal direction of the aerosol generating device 100. The induction coil 124 may extend to an appropriate length along the longitudinal direction. For example, the induction coil 124 may extend to a length corresponding to a length of the susceptor 122 or may extend to a length greater than a length of the susceptor 122.

The induction coil 124 may be located at a position suitable for applying an alternating magnetic field to the susceptor 122. For example, the induction coil 124 may be located at a position corresponding to the susceptor 122. The efficiency with which an alternating magnetic field of the induction coil 124 is applied to the susceptor 122 may be improved due to the size and arrangement of the induction coil 124.

When an amplitude or a frequency of an alternating magnetic field formed by the induction coil 124 is changed, a degree to which the susceptor 122 heats the aerosol generating article 15 may also be changed. Because an amplitude or a frequency of a magnetic field by the induction coil 124 may be changed by power applied to the induction coil 124, the aerosol generating device 100 may control heating of the aerosol generating article 15 by adjusting power applied to the induction coil 124. For example, the aerosol generating device 100 may control an amplitude and a frequency of alternating current applied to the induction coil 124.

In an example, the induction coil 124 may be implemented as a solenoid. The induction coil 124 may be a solenoid wound along the inner surface of the outer housing of the aerosol generating device 100, and the susceptor 122 and the aerosol generating article 15 may be located in an inner space of the solenoid. A material of a wire constituting the solenoid may be copper (Cu). However, the disclosure is not limited thereto, and silver (Ag), gold (Au), aluminum (Al), tungsten (W), zinc (Zn), or nickel (Ni) or an alloy including at least one of them may be a material of the wire constituting the solenoid.

The battery 115 may supply power to the aerosol generating device 100. The battery 115 may supply power to the induction coil 124. The battery 115 may include a battery that supplies direct current to the aerosol generating device 100 and a converter that converts the direct current supplied from the battery into alternating current supplied to the induction coil 124.

The battery 115 may supply direct current to the aerosol generating device 100. The battery 115 may be, but is not limited to, a lithium iron phosphate (LiFePO4) battery. For example, the battery may be a lithium cobalt oxide (LiCoO2) battery, a lithium titanate battery, or a lithium polymer (LiPoly) battery.

The converter may include a low-pass filter that filters direct current supplied from the battery and outputs alternating current supplied to the induction coil 124. The converter may further include an amplifier for amplifying direct current supplied from the battery. For example, the converter may be implemented through a low-pass filter that constitutes a load network of a class-D amplifier.

The controller 110 may control power supplied to the induction coil 124. The controller 110 may control the battery 115 to adjust power supplied to the induction coil 124. For example, the controller 110 may perform control to keep constant a temperature at which the susceptor 122 heats the aerosol generating article 15 based on a temperature of the susceptor 122.

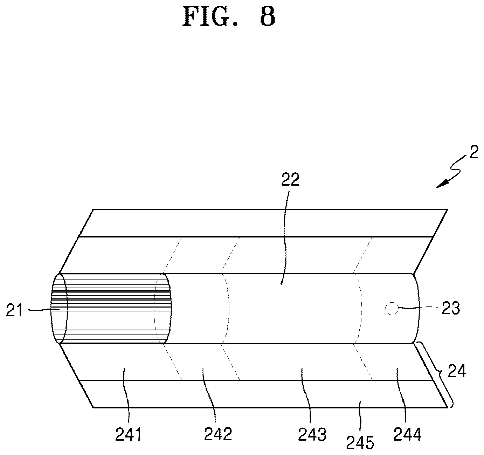

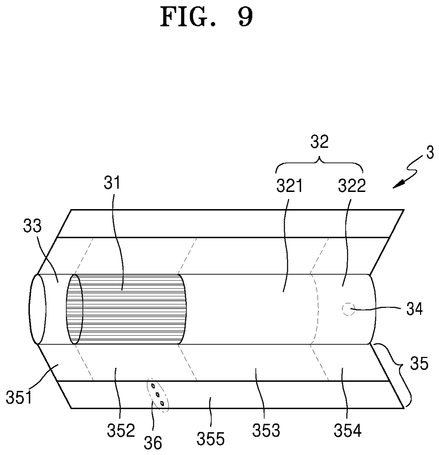

FIGS. 8 and 9 are views illustrating examples of a cigarette.

Referring to FIG. 8, a cigarette 2 includes a tobacco rod 21 and a filter rod 22. Although the filter rod 22 is shown as a single segment in FIG. 8, the disclosure is not limited thereto. In other words, the filter rod 22 may include a plurality of segments. For example, the filter rod 22 may include a segment for cooling aerosol and a segment for filtering a certain component included in the aerosol. Also, when necessary, at least one segment for performing another function may be further included in the filter rod 22.

A diameter of the cigarette 2 may be within a range of 5 mm to 9 mm and a length of the cigarette 2 may be about 48 mm, but the disclosure is not limited thereto. For example, a length of the tobacco rod 21 may be about 12 mm, a length of a first segment of the filter rod 22 may be about 10 mm, a length of a second segment of the filter rod 22 may be about 14 mm, and a length of a third segment of the filter rod 22 may be about 12 mm, but the disclosure is not limited thereto.

The cigarette 2 may be packaged by at least one wrapper 24. At least one hole through which external air is introduced or internal air is discharged may be formed in the wrapper 24. For example, the cigarette 2 may be packaged by one wrapper 24. In another example, the cigarette 2 may be doubly packaged by at least two wrappers 24. For example, the tobacco rod 21 may be packaged by a first wrapper 241, and the filter rod 22 may be packaged by second to fourth wrappers 242, 243, and 244. The cigarette 2 may be entirely re-packaged by a third wrapper 245 that is a single wrapper. When the filter rod 22 includes a plurality of segments, the plurality of segments may be respectively packaged by the second to fourth wrappers 242, 243, and 244.

The first wrapper 241 and the second wrapper 242 may be made of general filter wrapping paper. For example, the first wrapper 241 and the second wrapper 242 may be porous wrapping paper or non-porous wrapping paper. Also, the first wrapper 241 and the second wrapper 242 may be made of oil-resistant paper and/or aluminum laminated packaging paper.

The third wrapper 243 may be made of hard wrapping paper. For example, a basis weight of the third wrapper 243 may be within a range of 88 g/m2 to 96 g/m2, and preferably within a range of 90 g/m2 to 94 g/m2. Also, a thickness of the third wrapper 243 may be within a range of 120 um to 130 um, and may preferably be 125 um.

The fourth wrapper 244 may be made of oil-resistant hard wrapping paper. For example, a basis weight of the fourth wrapper 244 may be within a range of 88 g/m2 to 96 g/m2, and preferably within a range of 90 g/m2 to 94 g/m2. Also, a thickness of the fourth wrapper 244 may be within a range of 120 um to 130 um, and may preferably be 125 um.

The fifth wrapper 245 may be made of sterile paper MFW. The sterile paper MFW refers to paper specially manufactured to improve tensile strength, water resistance, smoothness, etc. compared to general paper. For example, a basis weight of the fifth wrapper 245 may be within a range of 57 g/m2 to 63 g/m2, and may preferably be 60 g/m2. Also, a thickness of the fifth wrapper 245 may be within a range of 64 um to 70 um, and may preferably be 67 um.

The fifth wrapper 245 may include a certain material added therein. The certain material may correspond to, for example, but not limited to, silicon. For example, silicon has characteristics such as heat resistance with little change according to temperature, oxidation resistance, resistance to various chemicals, water repellency, and electrical insulation. However, the disclosure is not limited to silicon, and any material having the above characteristics may be applied (coated) to the fifth wrapper 245 without limitation.

The fifth wrapper 245 may prevent the cigarette 2 from being burned. For example, when the tobacco rod 21 is heated by a heater 13, the cigarette 2 is likely to be burned. In detail, when a temperature rises above an ignition point of any one of materials included in the tobacco rod 21, the cigarette 2 may be burned. Even in this case, because the fifth wrapper 245 includes a noncombustible material, burning of the cigarette 2 may be prevented.

Also, the fifth wrapper 245 may prevent an aerosol generating device 1 from being contaminated by substances generated by the cigarette 2. Liquid substances may be generated in the cigarette 2 by a user's puff. For example, when aerosol generated in the cigarette 2 is cooled by external air, liquid substances (e.g., moisture) may be generated. As the fifth wrapper 245 wraps the cigarette 2, the liquid substances generated in the cigarette 2 may be prevented from leaking out of the cigarette 2.

The tobacco rod 21 includes an aerosol generating material. For example, the aerosol generating material may include at least one of, but not limited to, glycerin, propylene glycol, ethylene glycol, dipropylene glycol, diethylene glycol, triethylene glycol, tetraethylene glycol, and oleyl alcohol. Also, the tobacco rod 21 may include other additives such as flavors, a wetting agent, and/or organic acid. Also, a flavoring liquid such as menthol or a moisturizer may be added by being sprayed to the tobacco rod 21.

The tobacco rod 21 may be manufactured in various ways. For example, the tobacco rod 21 may be manufactured as sheets or strands. Also, the tobacco rod 21 may be manufactured by finecutting a tobacco sheet into a cut filler. Also, the tobacco rod 21 may be surrounded by a thermally conductive material. For example, the thermally conductive material may be a metal foil such as an aluminum foil, but the disclosure is not limited thereto. For example, the thermally conductive material surrounding the tobacco rod 21 may evenly disperse heat transferred to the tobacco rod 21, thereby improving thermal conductivity applied to the tobacco rod and improving a tobacco taste. Also, the thermally conductive material surrounding the tobacco rod 21 may function as a susceptor heated by an induction heater. In this case, although not shown, the tobacco rod 21 may further include an additional susceptor in addition to the thermally conductive material surrounding the tobacco rod 21.

The filter rod 22 may be a cellulose acetate filter. A shape of the filter rod 22 is not limited. For example, the filter rod 22 may be a cylinder-type rod or a tube-type rod having a hollow inside. Also, the filter rod 22 may be a recess-type rod. When the filter rod 22 includes a plurality of segments, at least one of the plurality of segments may have a different shape.

A first segment of the filter rod 22 may be a cellulose acetate filter. For example, the first segment may have a tubular structure having a hollow inside. Due to the first segment, an internal material of the tobacco rod 21 may be prevented from being pushed back when the heater 13 is inserted, and aerosol may be cooled. A diameter of the hollow included in the first segment may be appropriately selected within a range of 2 mm to 4.5 mm, but the disclosure is not limited thereto.

A length of the first segment may be appropriately selected within a range of 4 mm to 30 mm, but the disclosure is not limited thereto. Preferably, a length of the first segment may be 10 mm, but the disclosure is not limited thereto.

A hardness of the first segment may be adjusted by adjusting the content of a plasticizer when the first segment is manufactured. Also, the first segment may be manufactured by inserting a structure such as films or tubes formed of the same material or different materials into the first segment (e.g., into the hollow).

A second segment of the filter rod 22 cools aerosol generated when the heater 13 heats the tobacco rod 21. Accordingly, the user may inhale aerosol cooled to an appropriate temperature.

A length or a diameter of the second segment may be determined in various ways according to a shape of the cigarette 2. For example, a length of the second segment may be appropriately selected within a range of 7 mm to 20 mm. Preferably, a length of the second segment may be about 14 mm, but the disclosure is not limited thereto.

The second segment may be manufactured by weaving a polymer fiber. In this case, a flavoring liquid may be applied to a fiber formed of polymer. Alternatively, the second segment may be manufactured by weaving a separate fiber to which a flavoring liquid is applied and a fiber formed of polymer together. Alternatively, the second segment may be formed of a crimped polymer sheet.

For example, the polymer may be prepared with a material selected from the group consisting of polyethylene (PE), polypropylene (PP), polyvinyl chloride (PVC), polyethylene terephthalate (PET), polylactic acid (PLA), cellulose acetate (CA), and aluminum foil.

As the second segment is formed of a weaved polymer fiber or a crimped polymer sheet, the second segment may include one or more channels extending in a longitudinal direction. The term 'channel' refers to a passage through which gas (e.g., air or aerosol) passes.

For example, the second segment formed of a crimped polymer sheet may be formed of a material having a thickness between about 5 µm and about 300 µm, for example, between about 10 µm and about 250 µm. Also, a total surface area of the second segment may be between about 300 mm2/mm and about 1000 mm2/mm. Also, an aerosol cooling element may be formed of a material having a specific surface area of about 10 mm2/mg to about 100 mm2/mg.

A thread including a volatile flavor component may be included in the second segment. The volatile flavor component may be, but is not limited to, menthol. For example, in order to provide menthol of 1.5 mg or more to the second segment, a sufficient amount of menthol may be filled in the thread.

A third segment of the filter rod 22 may be a cellulose acetate filter. A length of the third segment may be appropriately selected within a range of 4 mm to 20 mm. For example, a length of the third segment may be, but is not limited to, about 12 mm.

In a process of manufacturing the third segment, a flavoring liquid may be sprayed to the third segment to generate flavor. Alternatively, a separate fiber coated with a flavoring liquid may be inserted into the third segment. Aerosol generated in the tobacco rod 21 is cooled as passing through the second segment of the filter rod 22, and the cooled aerosol is delivered to the user through the third segment. Accordingly, when a flavoring element is added to the third segment, the persistence of flavor delivered to the user may be improved.

Also, at least one capsule 23 may be included in the filter rod 22. The capsule 23 may generate a flavor or may generate aerosol For example, the capsule 23 may have a structure in which a liquid including a flavoring material is wrapped with a film. The capsule 23 may have a spherical or cylindrical shape, but the disclosure is not limited thereto.

Referring to FIG. 9, a cigarette 3 may further include a front end plug 33. The front end plug 33 may be located on a side of a tobacco rod 31, the side facing a filter rod 32. The front end plug 33 may prevent the tobacco rod 31 from being detached to the outside, and may prevent liquefied aerosol from flowing into the aerosol generating device 1 (see FIGS. 1 to 3) from the tobacco rod 31 during smoking.

The filter rod 32 may include a first segment 321 and a second segment 322. The first segment 321 may correspond to the first segment of the filter rod 22 of FIG. 8, and the second segment 322 may correspond to the third segment of the filter rod 22 of FIG. 8.

A diameter and a total length of the cigarette 3 may correspond to a diameter and a total length of the cigarette 2 of FIG. 8. For example, a length of the front end plug 33 may be about 7 mm, a length of the tobacco rod 31 may be about 15 mm, a length of the first segment 321 may be about 12 mm, and a length of the second segment 322 may be about 14 mm, and the disclosure is not limited thereto.

The cigarette 3 may be packaged by at least one wrapper 35. At least one hole through which external air is introduced and internal gas is discharged may be formed in the wrapper 35. For example, the front end plug 33 may be packaged by a first wrapper 351, the tobacco rod 31 may be packaged by a second wrapper 352, the first segment 321 may be packaged by a third wrapper 353 and the second segment 322 may be packaged by a fourth wrapper 354. The entire cigarette 3 may be re-packaged by a fifth wrapper 355.

Also, at least one through-hole 36 may be formed in the fifth wrapper 355. For example, the through-hole 36 may be formed in an area surrounding the tobacco rod 31, but the disclosure is not limited thereto. The through-hole 36 may transfer heat generated by the heater 13 of FIGS. 2 and 3 into the tobacco rod 31.

Also, at least one capsule 34 may be included in the second segment 322. The capsule 34 may generate a flavor or may generate aerosol. For example, the capsule 34 may have a structure in which a liquid including a flavoring material is wrapped with a film. The capsule 34 may have a spherical or cylindrical shape, but the disclosure is not limited thereto.

The first wrapper 351 may be a metal foil such as an aluminum foil bonded to general filter wrapping paper. For example, a total thickness of the first wrapper 351 may be within a range of 45 um to 55 um, and may preferably be 50.3 um. Also, a thickness of the metal foil of the first wrapper 351 may be within a range of 6 um to 7 um, and may preferably be 6.3 um. Also, a basis weight of the first wrapper 351 may be within a range of 50 g/m2 to 55 g/m2, and may preferably be 53 g/m2.

The second wrapper 352 and the third wrapper 353 may be made of general filter wrapping paper. For example, the second wrapper 352 and the third wrapper 353 may be porous wrapping paper or non-porous wrapping paper.

For example, a porosity of the second wrapper 352 may be, but is not limited to, 35000 CU. Also, a thickness of the second wrapper 352 may be within a range of 70 um to 80 um, and may preferably be 78 um. Also, a basis weight of the second wrapper 352 may be within a range of 20 g/m2 to 25 g/m2, and may preferably be 23.5 g/m2.

For example, a porosity of the third wrapper 353 may be, but is not limited to, 24000 CU. Also, a thickness of the third wrapper 353 may be within a range of 60 um to 70 um, and may preferably be 68 um. Also, a basis weight of the third wrapper 353 may be within a range of 20 g/m2 to 25 g/m2, and may preferably be 21 g/m2.

The fourth wrapper 354 may be made of polylactic acid (PLA) laminated paper. The PLA laminated paper refers to three-layer paper including a paper layer, a PLA layer, and a paper layer. For example, a thickness of the fourth wrapper 354 may be within a range of 100 um to 120 um, and may preferably be 110 um. Also, a basis weight of the fourth wrapper 354 may be within a range of 80 g/m2 to 100 g/m2, and may preferably be 88 g/m2.

The fifth wrapper 355 may be made of sterile paper MFW. The sterile paper MFW refers to paper specially manufactured to improve tensile strength, water resistance, smoothness, etc. compared to general paper. For example, a basis weight of the fifth wrapper 355 may be within a range 57 g/m2 to 63 g/m2, and may preferably be 60 g/m2. Also, a thickness of the fifth wrapper 355 may be within a range of 64 um to 70 um, and may preferably be 67 um.

The fifth wrapper 355 may include a certain material added therein. The certain material may correspond to, for example, but not limited to, silicon. For example, silicon has characteristics such as heat resistance with little change according to temperature, oxidation resistance, resistance to various chemicals, water repellency, and electrical insulation. However, the disclosure is not limited to silicon, and any material having the above characteristics may be applied (coated) to the fifth wrapper 355 without limitation.

The front end plug 33 may be made of cellulose acetate. For example, the front end plug 33 may be manufactured by adding a plasticizer (e.g., triacetin) to a cellulose acetate tow. A mono denier of a filament constituting the cellulose acetate tow may be within a range of 1.0 to 10.0, and preferably within a range of 4.0 to 6.0. More preferably, a mono denier of the filament of the front end plug 33 may be 5.0. Also, a cross-section of the filament constituting the front end plug 33 may have a Y-shape. A total denier of the front end plug 33 may be within a range of 20000 to 30000, and preferably within a range of 25000 to 30000. More preferably, a total denier of the front end plug 33 may be 28000.

Also, when necessary, the front end plug 33 may include at least one channel, and a crosssectional shape of the channel may be any of various shapes.

The tobacco rod 31 may correspond to the tobacco rod 21 described with reference to FIG. 8. Accordingly, a detailed description of the tobacco rod 31 will be omitted below.

The first segment 321 may be made of cellulose acetate. For example, the first segment may have a tubular structure including a hollow inside. The first segment 321 may be manufactured by adding a plasticizer (e.g., triacetin) to a cellulose acetate tow. For example, a mono denier and a total denier of the first segment 321 may be the same as a mono denier and a total denier of the front end plug 33.

The second segment 322 may be made of cellulose acetate. A mono denier of a filament constituting the second segment 322 may be within a range of 1.0 to 10.0, and preferably within a range of 8.0 to 10.0. More preferably, a mono denier of the filament of the second segment 322 may be 9.0. Also, a cross-section of the filament of the second segment 322 may have a Y-shape. A total denier of the second segment 322 may be within a range of 20000 to 30000, and may preferably be 25000.

FIG. 10 is a block diagram of an aerosol generating device 1000 according to another embodiment.

The aerosol generating device 1000 may include a controller 1010, a sensing unit 1020, an output unit 1030, a battery 1040, a heater 1050, a user input unit 1060, a memory 1070, and a communication unit 1080. However, the internal structure of the aerosol generating device 1000 is not limited to those illustrated in FIG. 10. That is, according to the design of the aerosol generating device 1000, it will be understood by one of ordinary skill in the art that some of the components shown in FIG. 10 may be omitted or new components may be added.

The sensing unit 1020 may sense a state of the aerosol generating device 1000 and a state around the aerosol generating device 1000, and transmit sensed information to the controller 1010. Based on the sensed information, the controller 1010 may control the aerosol generating device 1000 to perform various functions, such as controlling an operation of the heater 1050, limiting smoking, determining whether an aerosol generating article (e.g., a cigarette, a cartridge, or the like) is inserted, displaying a notification, or the like.

The sensing unit 1020 may include at least one of a temperature sensor 1022, an insertion detection sensor, and a puff sensor 1026, but is not limited thereto.

The temperature sensor 1022 may sense a temperature at which the heater 1050 (or an aerosol generating material) is heated. The aerosol generating device 1000 may include a separate temperature sensor for sensing the temperature of the heater 1050, or the heater 1050 may serve as a temperature sensor. Alternatively, the temperature sensor 1022 may also be arranged around the battery 1040 to monitor the temperature of the battery 1040.

The insertion detection sensor 1024 may sense insertion and/or removal of an aerosol generating article. For example, the insertion detection sensor 1024 may include at least one of a film sensor, a pressure sensor, an optical sensor, a resistive sensor, a capacitive sensor, an inductive sensor, and an infrared sensor, and may sense a signal change according to the insertion and/or removal of an aerosol generating article.

The puff sensor 1026 may sense a user's puff on the basis of various physical changes in an airflow passage or an airflow channel. For example, the puff sensor 1026 may sense a user's puff on the basis of any one of a temperature change, a flow change, a voltage change, and a pressure change.

The humidity detection sensor 1028 may measure the amount of moisture included in the cigarette. The humidity detection sensor 1028 may be any one of an electrical resistance sensor, a capacitance sensor, and an optical sensor. However, this is an example, and the humidity detection sensor 1028 is not limited thereto.

The sensing unit 1020 may include, in addition to the temperature sensor 1022, the insertion detection sensor 1024, the puff sensor 1026, and the humidity detection sensor 1028 described above, at least one of a temperature/humidity sensor, a barometric pressure sensor, a magnetic sensor, an acceleration sensor, a gyroscope sensor, a location sensor (e.g., a global positioning system (GPS)), a proximity sensor, and a red-green-blue (RGB) sensor (illuminance sensor). Because a function of each of sensors may be intuitively inferred by one of ordinary skill in the art from the name of the sensor, a detailed description thereof may be omitted.

The output unit 1030 may output information on a state of the aerosol generating device 1000 and provide the information to a user. The output unit 1030 may include at least one of a display unit 1032, a haptic unit 1034, and a sound output unit 1036, but is not limited thereto. When the display unit 1032 and a touch pad form a layered structure to form a touch screen, the display unit 1032 may also be used as an input device in addition to an output device.

The display unit 1032 may visually provide information about the aerosol generating device 1000 to the user. For example, information about the aerosol generating device 1000 may mean various pieces of information, such as a charging/discharging state of the battery 1040 of the aerosol generating device 1000, a preheating state of the heater 1050, an insertion/removal state of an aerosol generating article, or a state in which the use of the aerosol generating device 1000 is restricted (e.g., sensing of an abnormal object), or the like, and the display unit 1032 may output the information to the outside. The display unit 1032 may be, for example, a liquid crystal display panel (LCD), an organic light-emitting diode (OLED) display panel, or the like. In addition, the display unit 1032 may be in the form of a light-emitting diode (LED) light-emitting device.

The haptic unit 1034 may tactilely provide information about the aerosol generating device 1000 to the user by converting an electrical signal into a mechanical stimulus or an electrical stimulus. For example, the haptic unit 1034 may include a motor, a piezoelectric element, or an electrical stimulation device.

The sound output unit 1036 may audibly provide information about the aerosol generating device 1000 to the user. For example, the sound output unit 1036 may convert an electrical signal into a sound signal and output the same to the outside.

The battery 1040 may supply power used to operate the aerosol generating device 1000. The battery 1040 may supply power such that the heater 1050 may be heated. In addition, the battery 1040 may supply power required for operations of other components (e.g., the sensing unit 1020, the output unit 1030, the user input unit 1060, the memory 1070, and the communication unit 1080) in the aerosol generating device 1000. The battery 1040 may be a rechargeable battery or a disposable battery. For example, the battery 1040 may be a lithium polymer (LiPoly) battery, but is not limited thereto.

The heater 1050 may receive power from the battery 1040 to heat an aerosol generating material. Although not illustrated in FIG. 10, the aerosol generating device 1000 may further include a power conversion circuit (e.g., a direct current (DC)/DC converter) that converts power of the battery 1040 and supplies the same to the heater 1050. In addition, when the aerosol generating device 1000 generates aerosols in an induction heating method, the aerosol generating device 1000 may further include a DC/alternating current (AC) that converts DC power of the battery 1040 into AC power.

The controller 1010, the sensing unit 1020, the output unit 1030, the user input unit 1060, the memory 1070, and the communication unit 1080 may each receive power from the battery 1040 to perform a function. Although not illustrated in FIG. 10, the aerosol generating device 1000 may further include a power conversion circuit that converts power of the battery 1040 to supply the power to respective components, for example, a low dropout (LDO) circuit, or a voltage regulator circuit.

In an embodiment, the heater 1050 may be formed of any suitable electrically resistive material. For example, the suitable electrically resistive material may be a metal or a metal alloy including titanium, zirconium, tantalum, platinum, nickel, cobalt, chromium, hafnium, niobium, molybdenum, tungsten, tin, gallium, manganese, iron, copper, stainless steel, nichrome, or the like, but is not limited thereto. In addition, the heater 1050 may be implemented by a metal wire, a metal plate on which an electrically conductive track is arranged, a ceramic heating element, or the like, but is not limited thereto.

In another embodiment, the heater 1050 may be a heater of an induction heating type. For example, the heater 1050 may include a suspector that heats an aerosol generating material by generating heat through a magnetic field applied by a coil.

In an embodiment, the heater 1050 may include a plurality of heaters. For example, the heater 1050 may include a first heater for heating the cigarette and a second heater for heating the liquid composition.

The user input unit 1060 may receive information input from the user or may output information to the user. For example, the user input unit 1060 may include a key pad, a dome switch, a touch pad (a contact capacitive method, a pressure resistance film method, an infrared sensing method, a surface ultrasonic conduction method, an integral tension measurement method, a piezo effect method, or the like), a jog wheel, a jog switch, or the like, but is not limited thereto. In addition, although not illustrated in FIG. 10, the aerosol generating device 1000 may further include a connection interface, such as a universal serial bus (USB) interface, and may connect to other external devices through the connection interface, such as the USB interface, to transmit and receive information, or to charge the battery 1040.

The memory 1070 is a hardware component that stores various types of data processed in the aerosol generating device 1000, and may store data processed and data to be processed by the controller 1010. The memory 1070 may include at least one type of storage medium from among a flash memory type, a hard disk type, a multimedia card micro type memory, a card-type memory (for example, secure digital (SD) or extreme digital (XD) memory, etc.), random access memory (RAM), static random access memory (SRAM), read-only memory (ROM), electrically erasable programmable read-only memory (EEPROM), programmable read-only memory (PROM), a magnetic memory, a magnetic disk, and an optical disk. The memory 1070 may store an operation time of the aerosol generating device 1000, the maximum number of puffs, the current number of puffs, at least one temperature profile, data on a user's smoking pattern, etc.

The communication unit 1080 may include at least one component for communication with another electronic device. For example, the communication unit 1080 may include a short-range wireless communication unit 1082 and a wireless communication unit 1084.

The short-range wireless communication unit 1082 may include a Bluetooth communication unit, a Bluetooth Low Energy (BLE) communication unit, a near field communication unit, a wireless LAN (WLAN) (Wi-Fi) communication unit, a Zigbee communication unit, an infrared data association (IrDA) communication unit, a Wi-Fi Direct (WFD) communication unit, an ultrawideband (UWB) communication unit, an Ant+ communication unit, or the like, but is not limited thereto.

The wireless communication unit 1084 may include a cellular network communication unit, an Internet communication unit, a computer network (e.g., local area network (LAN) or wide area network (WAN)) communication unit, or the like, but is not limited thereto. The wireless communication unit 1084 may also identify and authenticate the aerosol generating device 1000 within a communication network by using subscriber information (e.g., International Mobile Subscriber Identifier (IMSI)).

The controller 1010 may control general operations of the aerosol generating device 1000. In an embodiment, the controller 1010 may include at least one processor. The processor may be implemented as an array of a plurality of logic gates or may be implemented as a combination of a general-purpose microprocessor and a memory in which a program executable by the microprocessor is stored. It will be understood by one of ordinary skill in the art that the processor may be implemented in other forms of hardware.

Those of ordinary skill in the art related to the present embodiments may understand that various changes in form and details can be made therein without departing from the scope of the characteristics described above. Therefore, the disclosed methods should be considered in a descriptive point of view, not a restrictive point of view. The scope of the present disclosure is defined by the appended claims rather than by the foregoing description, and all differences within the scope of equivalents thereof should be construed as being included in the present disclosure.

## Claims

1. An aerosol generating device comprising:
a receiving space into which an aerosol generating article is inserted;
a heater configured to heat the aerosol generating article;
an insertion detecting sensor configured to detect whether the aerosol generating article is inserted into the receiving space;
a memory comprising a lookup table in which a preset value is matched to each aerosol generating article; and
a controller,
wherein the controller is configured to,
when it is detected through the insertion detecting sensor that the aerosol generating article inserted into the receiving space is moved from the receiving space during a heating operation of the heater, pause the heating operation of the heater, and
determine whether to resume the heating operation of the heater according to whether the aerosol generating article is re-inserted into the receiving space within a preset grace time from a time point when the heating operation is paused.

2. The aerosol generating device of claim 1, wherein the controller is further configured to determine that the aerosol generating article is moved, when a change amount of a sensing value detected by using the insertion detecting sensor is different from the preset value.

3. The aerosol generating device of claim 1, wherein the movement comprises a case where a front end of the aerosol generating article deviates by a preset distance from a bottom surface of the receiving space or a case where the front end of the aerosol generating article facing the bottom surface of the receiving space completely deviates from the receiving space.

4. The aerosol generating device of claim 1, wherein the controller is further configured to resume the heating operation of the heater when it is determined that the aerosol generating article is re-inserted into the receiving space within the preset grace time, and
turn off the heating operation of the heater when it is determined that the aerosol generating articles is not re-inserted into the receiving space within the preset grace time.

5. The aerosol generating device of claim 1, wherein the insertion detecting sensor comprises at least one of an inductive sensor for detecting an inductance change of the receiving space, a temperature sensor for detecting a temperature of the heater, and a capacitive sensor for detecting a capacitance change of the receiving space.

6. The aerosol generating device of claim 5, wherein the controller is further configured to switch a state of the inductive sensor to an active state according to a certain period, during the grace time, and
detect an inductance change through the inductive sensor switched to the active state.

7. The aerosol generating device of claim 6, wherein the controller is further configured to
detect a first inductance change of the receiving space according to the certain period when the aerosol generating article is inserted into the receiving space, and
determine that the aerosol generating article is moved from the receiving space when a magnitude of the detected first inductance change is equal to or greater than a first threshold value.

8. The aerosol generating device of claim 6, wherein the controller is further configured to detect a second inductance change of the receiving space according to the certain period for a designated time through the inductive sensor when the aerosol generating article is moved from the receiving space, and
detect re-insertion of the aerosol generating article when a magnitude of the detected second inductance change is equal to or greater than a second threshold value.

9. The aerosol generating device of claim 1, wherein the aerosol generating article comprises a thermally conductive material comprising at least one of aluminum, nickel, and iron.

10. An operating method of an aerosol generating device, comprising:
detecting, through an insertion detecting sensor, whether an aerosol generating article inserted into a receiving space is moved from the receiving space, during a heating operation of a heater;
pausing the heating operation of the heater when the aerosol generating article is moved from the receiving space; and
determining whether to resume the heating operation of the heater according to whether the aerosol generating article is re-inserted into the receiving space within a preset grace time from a time point when the heating operation is paused.

11. The operating method of the aerosol generating device of claim 10, wherein the detecting whether the aerosol generating article is moved from the receiving space comprises determining that the aerosol generating article is moved when a change amount of a sensing value detected by using the insertion detecting sensor based on a lookup table in which a preset value is matched to each aerosol generating article is different from the preset value.

12. The operating method of the aerosol generating device of claim 10, wherein the movement comprises a case where a front end of the aerosol generating article deviates by a preset distance from a bottom surface of the receiving space or a case where the front end of the aerosol generating article facing the bottom surface of the receiving space completely deviates from the receiving space.

13. The operating method of the aerosol generating device of claim 10, wherein the insertion detecting sensor comprises at least one of an inductive sensor for detecting an inductance change of the receiving space, a temperature sensor for detecting a temperature of the heater, and a capacitive sensor for detecting a capacitance change of the receiving space.

14. The operating method of the aerosol generating device of claim 10, wherein the determining whether to resume the heating operation of the heater comprises
resuming the heating operation of the heater when it is determined that the aerosol generating article is re-inserted into the receiving space within the preset grace time, and
turning off the heating operation of the heater when it is determined that the aerosol generating article is not re-inserted into the receiving space within the preset grace time.

15. The operating method of the aerosol generating device of claim 10, wherein the aerosol generating article comprises a thermally conductive material comprising at least one of aluminum, nickel, and iron.
